(19) Europäisches Patentamt
European Patent Office
Office européen des brevets

(11) EP 0 614 541 B1

## (12) EUROPEAN PATENT SPECIFICATION

(45) Date of publication and mention
of the grant of the patent:
**09.07.1997 Bulletin 1997/28**

(21) Application number: **93921701.4**

(22) Date of filing: **21.09.1993**

(51) Int Cl.⁶: **G02B 27/00**

(86) International application number:
**PCT/US93/08904**

(87) International publication number:
**WO 94/08264 (14.04.1994 Gazette 1994/09)**

(54) **VEHICLE WITH OVERHEAD HEAD-UP DISPLAY**

FAHRZEUG MIT 'HEAD-UP'-ANZEIGE MIT EINER AM FAHRZEUGDACH MONTIERTEN
PROJEKTIONSEINHEIT

VEHICULE AUTOMOBILE AVEC DISPOSITIF D'AFFICHAGE PLACE AU-DESSUS DE LA TETE
D'UN CONDUCTEUR

(84) Designated Contracting States:
**DE FR GB SE**

(30) Priority: **30.09.1992 US 954522**

(43) Date of publication of application:
**14.09.1994 Bulletin 1994/37**

(73) Proprietor: **Hughes Aircraft Company
Los Angeles, California 90045-0066 (US)**

(72) Inventors:
 • **BLAZIC, Ernest, C.
 Hawthorne, CA 90250 (US)**
 • **WU, Ning
 Rancho Palos Verdes, CA 90274 (US)**
 • **SMALANSKAS, Joseph, P.
 Westchester, CA 90045 (US)**
 • **HOPKINS, Dale, W.
 Garden Grove, CA 92640 (US)**

(74) Representative: **Gahlert, Stefan, Dr.-Ing. et al
Witte, Weller, Gahlert, Otten & Steil,
Patentanwälte,
Rotebühlstrasse 121
70178 Stuttgart (DE)**

(56) References cited:
EP-A- 0 450 553          EP-A- 0 479 439
WO-A-91/00674            DE-A- 1 772 619
FR-A- 1 588 197          FR-A- 2 096 407
GB-A- 2 182 456          US-A- 3 632 184
US-A- 4 188 090          US-A- 4 831 366
US-A- 4 973 139

 • EP-A- 0 450 553
 • EP-A- 0 479 439
 • WO-A-91/00674
 • DE-A- 1 772 619
 • FR-A- 1 588 197
 • FR-A- 2 096 407
 • GB-A- 2 182 456
 • US-A- 3 632 184
 • US-A- 4 188 090
 • US-A- 4 831 366
 • US-A- 4 973 139

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a vehicle having a windshield, a passenger compartment, a roof and a combiner which is disposed at an adjustable angle with respect to the display source and the operator of the vehicle.

Such a head-up display system included in such a vehicle is known from US-A-4,831,366. In the known arrangement a projector unit is disposed at the ceiling of the vehicle to project display images and a combiner unit for reflecting the projected display images to the driver is disposed adjustable in its angular position and adjustable in its height, so that virtual display images can be appropriately seen by the driver ahead of the combiner unit along the driver's eye direction variable according to the vehicle speed.

The known design is difficult to retrofit into existing vehicles without major dashboard modification, since it requires a height adjustment mechanism that must be fitted into the dashboard.

Another state-of-the-art head-up display is described in U.S. Patent No. 4,973,139 which discloses a head-up display system that includes an image source for producing imaging illumination, optical apparatus for directing the illumination provided by the source to a windshield of a vehicle, and a combiner that comprises a portion of the windshield for partially reflecting the directed imaging illumination to produce a virtual image of the image source that is viewable by the operator of the vehicle.

Accordingly, it is an object of the present invention to provide a vehicle with an overhead mounted head-up display which can be easily fitted into existing vehicles without major modification of the dashboard and which allows to accommodate for operators having differing heights and that sit at different locations and which provides for the display of a virtual image at different locations in front of the windshield of the vehicle.

This object is achieved using a vehicle mentioned at the outset in which the combiner of the head-up display system has a large adjustable spherical radius of curvature to provide for the display of a virtual image at different locations in front of the windshield of the vehicle.

The image display source can be mounted off-axis or in-line with the viewer's or operator's forwarding viewing direction depending on the vehicle passenger compartment configuration. The display image source is used in conjunction with a spherical or an aspheric optical combiner to display sensor and communication data, for example, at an optimum viewing location. The spherical optical combiner is transparent and has a relatively large radius of curvature that is adjustable for displaying the virtual image at different locations in front of the windshield of the vehicle. An aspheric combiner is used to reduce optical disparity that arises when off-axis projection is used, in lieu of a conventional dash-mounted image source location (on-axis projection) The combiner location is angularly adjustable with respect to the display source, and the operator of the vehicle to accommodate operators with different heights and that sit in different locations relative to the combiner.

The present invention is particularly useful as a head-up virtual image display system for vehicle use that displays instrumentation information, and more particularly that provides a vehicle head-up dynamic instrument display that presents a virtual image instrument display at or ahead of the windshield of the vehicle. The present invention provides a means to retrofit existing vehicles with a head-up display system to improve operator and equipment safety and efficiency. Such a head-up display system is especially useful where a vehicle operators ability to assimilate sensor and communications data are in contention with the dynamics of the environment. A roof mounted image display source is ideal for retrofitting a vehicle passenger compartment with a virtual image display system because of the simplicity and flexibility of its design.

The present invention provides an improvement to the invention disclosed in U.S. Patent No. 4,973,139. The improved head-up display system of the present invention requires no mirrors and uses an optimized optical combiner surface for improved image clarity and brightness. The location of the image display source is ideal because there is generally ample room in the overhead area of a passenger compartment to mount equipment without interfering with the operator's field of view in any direction or freedom of movement. The roof mounted configuration also requires minimal modification to the existing passenger compartment of the vehicle. The optical combiner may be roof, dash or windshield mounted, whichever is most convenient. The combiner and image source locations do not interfere with the rear view mirror or sun visor functions.

The various features and advantages of the present invention may be more readily understood with reference to the following detailed description taken in conjunction with the accompanying drawings, wherein like reference numerals designate like structural elements, and in which:

Fig. 1 shows a top view of two embodiments of an overhead head-up display system in accordance with the principles of the present invention;

Fig. 2 shows a side view of the overhead head-up display systems of Fig. 1; and

Figs. 3 and 4 show top and side views detailing the installation of the overhead head-up display system of the present invention.

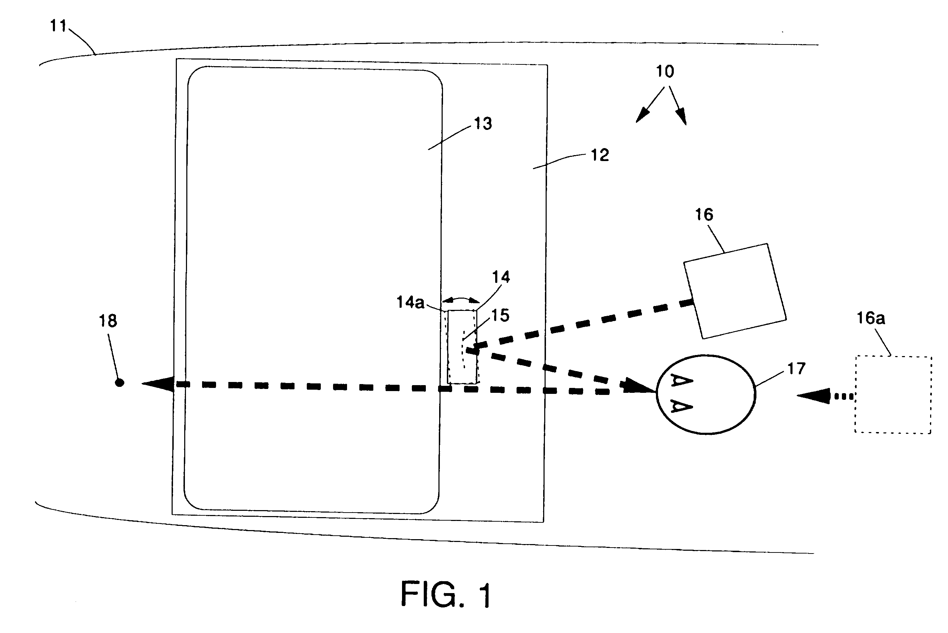

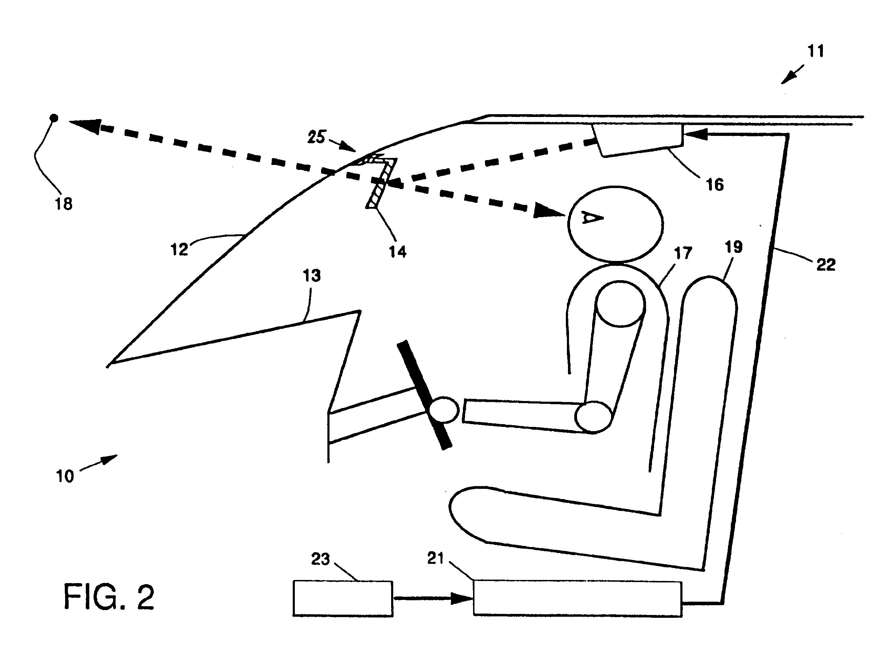

Referring to the drawing figures, Fig. 1 shows a top view of two embodiments of an overhead head-up display systems 10 in accordance with the principles of the present invention. Fig. 2 shows a side view of the overhead head-up display systems 10 of Fig. 1. Figs. 1 and 2 show a vehicle 11 having a passenger compartment and a roof 11a, and having a vehicle operator 17 occupying a seat 19 in a position to operate the vehicle 11. The vehicle 11 has a windshield 12 and a dashboard 13 that are conventional.

A projection unit or image display source 16 is attached to the roof 11a of the vehicle 11. In one embodiment of the present system 10, the image display source 16 is disposed off-axis relative to the line of sight of the operator 17, and is shown having solid lines. The image display source 16 is thus disposed at an angle relative to the operator's forward viewing direction. In an alternative embodiment of the system 10, the image display source 16a is disposed on-axis relative to the line of sight of the operator 17, and is shown having dashed lines. The image display source 16a is thus disposed in-line with respect to the operator's forward viewing direction. The image display source 16, 16a is coupled to an electronics unit 21 by way of a cable 22. The electronics unit 21 is coupled to a battery 23 of the vehicle 11. The electronics unit 21 is adapted to control either of the display sources 16, 16a in order to couple signals for projection thereby. The electronics unit 21 may be adapted to cause the image display sources 16 16a to project different types of image data including sensor and communications data, such as ar provided by radar systems, computers, or modems, for example, or may project such image data as fuel and temperature gages, or other operating conditions of the vehicle 11, for example.

In the overhead head-up display systems 10 shown in Figs. 1 and 2, a spheric or an aspheric optical combiner 14 is provided and has a relatively large radius of curvature 15. The combiner 14 is shown attached to the windshield 12, by means of a ball and socket connection 25, for example. The combiner 14 is angularly adjustable with respect to the display source 16 and the operator 17 of the vehicle 11 to accommodate operators 17 with different heights and that sit in different locations relative to the combiner 14. The focal length between the image display source 16 and the combiner 14, as well as the spherical radius of curvature 15 of the combiner 14 is adjustable to display a virtual image 18 at different locations in front of the windshield 12 of the vehicle 11. The angle of the combiner 14 relative to the operator 17 and the image display source 16 is also adjustable to accommodate operators with different height and seat placement. The image display source 16 is mounted on the roof 11a and the combiner 14 may be attached to the roof 11a, the windshield 12 (as is shown in the drawing figures) or the dashboard 13 (mounting provisions not shown).

The image display source 16 may comprise a cathode ray tube (CRT), a vacuum fluorescent display (VFD) or a liquid crystal display (LCD). Such image display sources 16 are currently available and may be readily employed in the present system 10. In an embodiment of the present invention that has been reduced to practice, a model RUNTK0180CEZ manufactured by Sharp was employed. The combiner 14 may be made from optical grade glass or plastic depending upon the application. Optical coatings or films may be disposed on the combiner 14 to enhance the image brightness seen by the operator 17. In the embodiment of the present invention that has been reduced to practice, the combiner 14 is made of polycarbonate and its concave surface is coated with a broadband visible coating, and its convex surface is coated with magnesium fluoride antireflective coating. A mathematical equation defining the concave surface that is well-understood by optical designers is given by

$$Z = -\left(Rx - \sqrt{\left(Ry - \Delta\right)^2 - X^2}\right), \text{ where } \Delta = \frac{Y^2}{Ry - \sqrt{+ Ry^2 - Y^2}}$$

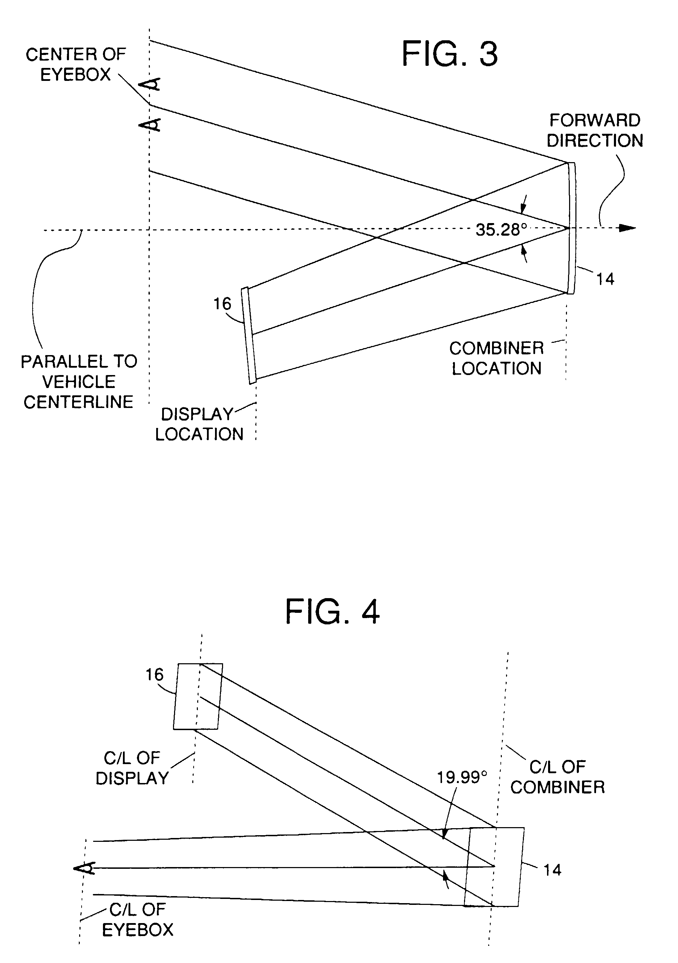

Figs. 3 and 4 show top and side views detailing the installation of the overhead head-up display system 10 of the present invention. The distances between components and angles between optical rays indicated on these drawing figures are those used in a typical automobile installation.

The overhead head-up display systems of the present invention have broad application to large numbers of commercial and military systems. Mobile and stationary equipment requiring an operator-monitored or controlled interface may benefit from the use of the present invention.

Thus, there has been described new and improved overhead head-up display systems. It is to be understood that the above-described embodiments are merely illustrative of some of the many specific embodiments which represent applications of the principles of the present invention. Clearly, numerous and other arrangements can be readily devised by those skilled in the art without departing from the scope of the invention as defined in the claims.

**Claims**

1. A vehicle (11) having a windshield (12), a passenger compartment, a roof (11a), and a head-up display system (10), wherein the head-up display system (10) is adapted to project a virtual image (18) for viewing by an operator (17) of the vehicle (11), said system comprising:

a display source (16, 16a) that is disposed in the passenger compartment adjacent the roof (11a) of the vehicle (11) and above the operator (17) of the vehicle (11); and

a combiner (14) which is disposed at an adjustable angle with respect to the display source (16, 16a) and the operator (17) of the vehicle (11);

characterized in that
said combiner (14) has a large, adjustable spherical radius of curvature (15) to provide for the display of a virtual image (18) at different locations in front of the windshield of the vehicle (11).

2. The vehicle of claim 1, characterized in that the display source (16) is disposed off-axis and at an angle relative to a forward viewing direction of the operator (17) defined by a line passing through the center of the seat (19) in the longitudinal direction of the vehicle (11).

3. The vehicle of claim 1, characterized in that the display source (16a) is disposed in-line with respect to a forward viewing direction of the operator (17) defined by a line passing through the center of the seat (19) in the longitudinal direction of the vehicle (11).

4. The vehicle of claim 1, characterized in that the combiner (14) is a spherical combiner.

5. The vehicle of claim 1, characterized in that the combiner (14) is an aspherical combiner.

**Patentansprüche**

1. Fahrzeug (11) mit einer Windschutzscheibe (12), einem Fahrgastraum, einem Dach (11a) und einem Head-up-Display-System (10), bei dem das Head-up-Display-System (10) dazu geeignet ist, ein virtuelles Bild (18) zur Betrachtung durch einen Bediener (17) des Fahrzeugs (11) zu projizieren, wobei das System umfaßt:

eine Anzeigequelle (16, 16a), die im Fahrgastabteil neben dem Dach (11a) des Fahrzeugs (11) über dem Bediener (17) des Fahrzeugs (11) angeordnet ist und

einen Kombinator (14), der mit einem einstellbaren Winkel in Bezug auf die Anzeigequelle (16, 16a) und den Bediener (17) des Fahrzeugs (11) angeordnet ist,

dadurch gekennzeichnet, daß
der Kombinator (14) einen großen, einstellbaren sphärischen Krümmungsradius (15) hat, um die Anzeige eines virtuellen Bildes (18) an verschiedenen Orten vor der Windschutzscheibe des Fahrzeugs (11) zu erlauben.

2. Fahrzeug nach Anspruch 1, dadurch gekennzeichnet, daß die Anzeigequelle (16) außerachsig und mit einem Winkel in Bezug auf eine nach vorwärts gerichtete Sichtrichtung des Bedieners (17) angeordnet ist, die durch eine Linie definiert ist, die durch die Mitte des Sitzes (19) in der Längsrichtung des Fahrzeugs (11) verläuft.

3. Fahrzeug nach Anspruch 1, dadurch gekennzeichnet, daß die Anzeigequelle (16a) mit einer nach vorwärts gerichteten Sichtrichtung des Bedieners (17) ausgerichtet ist, die durch eine durch die Mitte des Sitzes (19) in der Längsachse des Fahrzeugs (11) gerichtete Linie definiert ist.

4. Fahrzeug nach Anspruch 1, dadurch gekennzeichnet, daß der Kombinator (14) ein sphärischer Kombinator ist.

5. Fahrzeug nach Anspruch 1, dadurch gekennzeichnet, daß der Kombinator (14) ein asphärischer Kombinator ist.

**Revendications**

1. Véhicule (11) ayant un pare-brise (12), un habitacle pour passagers, un toit (11a), et un système (10) d'affichage tête haute, dans lequel le système (10) d'affichage tête haute est conçu pour projeter une image (18) virtuelle destinée à être vue par un opérateur (17) du véhicule (11), ledit système comprenant :

une source (16, 16a) d'affichage qui est disposée dans l'habitacle pour passager à proximité immédiate du toit (11a) du éhicule (11) et au-dessus de l'opérateur (17) du véhicule 11) ; et
un combineur (14) qui est disposé selon un angle réglable par rapport à la source (16, 16a) d'affichage et à l'opérateur (7) du véhicule (11) ;

caractérisé en ce que
ledit combineur (14) a un rayon (15) de courbure sphérique réglable élevé pour permettre l'affichage d'une image (18) virtuelle à différentes positions à l'avant du pare-brise du véhicule (11).

2. Véhicule selon la revendication 1, caractérisé en ce que la source (16) d'affichage est disposée de façon écartée de l'axe et selon un angle par rapport à la direction de vision vers l'avant de l'opérateur (17) qui est défini par une droite passant par le centre du siège (19) dans la direction longitudinale du véhicule (11).

3. Véhicule selon la revendication 1, caractérisé en ce que la source (16a) d'affichage est disposée de façon éloignée par rapport à une direction de vision vers l'avant de l'opérateur (17) qui est définie par une droite passant par le centre du siège (19) dans la direction longitudinale du véhicule (11).

4. Véhicule selon la revendication 1, caractérisé en ce que le combineur (14) est un combineur sphérique.

5. Véhicule selon la revendication 1, caractérisé en ce que le combineur (14) est un combineur asphérique.

FIG. 1

FIG. 2

# FIG. 3

CENTER OF
EYEBOX

FORWARD
DIRECTION

35.28°

14

16

PARALLEL TO
VEHICLE
CENTERLINE

COMBINER
LOCATION

DISPLAY
LOCATION

# FIG. 4

16

C/L OF
DISPLAY

19.99°

C/L OF
COMBINER

14

C/L OF
EYEBOX